# EUROPEAN PATENT APPLICATION

(11) **EP 1 956 534 A1**
(43) Date of publication of application: **13.08.2008**
(21) Application number: 07102105.9
(22) Date of filing: 09.02.2007
(51) Int. Cl.: G06Q 10/00

(54) **Method of processing calendar events, and associated handheld electronic device**

(71) Applicant: Research In Motion Limited, Waterloo, Ontario N2L 3W8 (CA)
(72) Inventor: May, Darrell R, Waterloo, Ontario N2V 2K6 (CA)
(74) Representative: Roberts, Gwilym Vaughan

(57) **Abstract**

An improved method and handheld electronic device enable a user to create a number of rules for processing incoming calendar events. If the trigger elements of a given rule are satisfied, a result of the rule is automatically carried out with respect to the incoming calendar event. A calendar event that satisfies the trigger elements of a predetermined rule can therefore be automatically processed in accordance with the rule and without direct involvement by the user, thereby saving time and effort.

## Description

### BACKGROUND

### Field

The disclosed and claimed concept relates generally to handheld electronic devices and, more particularly, to a method that is executable on a handheld electronic device or on a server and that processes calendar entries directed to the handheld electronic device.

### Description of the Related Art

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

Many handheld electronic devices and other electronic devices have a calendar function which can be used to manage appointments, and the like. Sometimes a calendar function is provided in conjunction with an email function, and the two functions cooperate with one another. For instance, an originator may employ the calendar function to create a new calendar event such as a meeting that is intended to be attended by a number of individuals. Upon creation of the new calendar event, an email is sent to each of the intended attendees wherein the email includes certain attributes such as a description of the subject matter of the proposed meeting, a list of the intended attendees, the originator, the location of the meeting, and the like, and typically would also give each intended attendee, i.e., recipient of the email, options to accept, decline, or delegate the meeting, among other options.

While such calendar and email applications have been generally effective for their intended use, such applications have not been without limitation. For instance, persons who attend large numbers of meetings throughout a given day can be required to spend an undesirably large amount of time managing incoming calendar events. For instance, an incoming calendar event may pose a time conflict with a preexisting calendar event, may cause a location conflict for the attendee, and/or might have other attributes which require the attention of the proposed attendee, i.e., recipient. It thus would be desired to provide an improved method of managing incoming calendar events in a way that would require less attention on an ongoing basis from the user.

### BRIEF DESCRIPTION OF THE DRAWINGS

A full understanding of the disclosed and claimed concept can be obtained from the following Description when read in conjunction with the accompanying drawings in which:

Fig. 1 is a front elevational view of an exemplary handheld electronic device in accordance with the disclosed and claimed concept;

Fig. 2 is a schematic depiction of the handheld electronic device of Fig. 1;

Fig. 3 is a schematic depiction of an improved communication system that includes the handheld electronic device of Figs. 1 and 2;

Fig. 4 is an exemplary flowchart depicting a portion of an improved method in accordance with the disclosed and claimed concept that can be executed on the handheld electronic device of Fig. 1 and/or on other portions of the communication system of Fig. 3;

Fig. 5 is a first exemplary screen of a rulemaking dialog that is generated by a calendar event rulemaking user interface executed on the handheld electronic device of Fig. 1;

Fig. 6 is a second exemplary screen of the rulemaking dialog.

Similar numerals refer to similar parts throughout the specification.

### DESCRIPTION

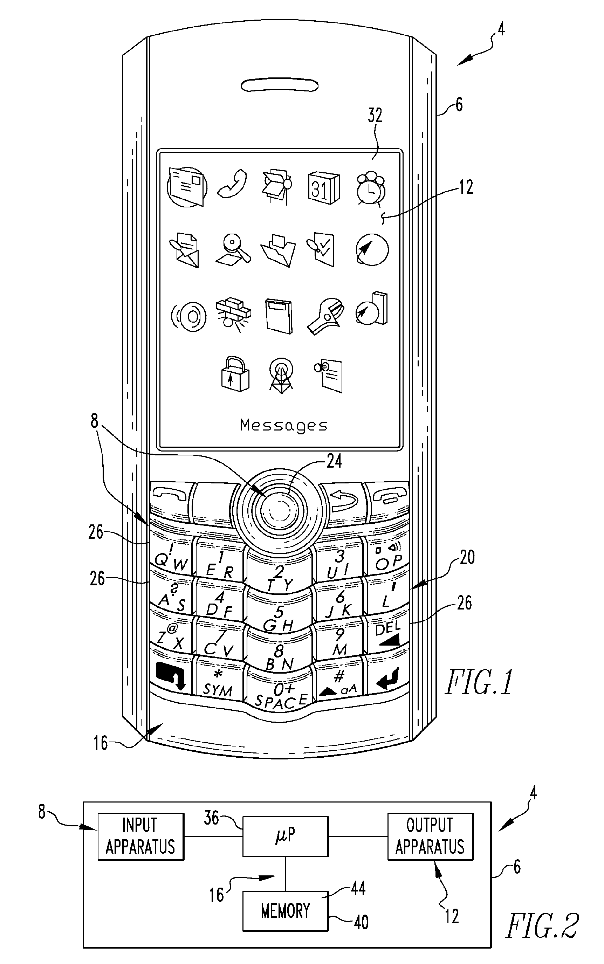

An improved handheld electronic device 4 in accordance with the disclosed and claimed concept is indicated generally in Fig. 1 and is depicted schematically in Fig. 2. The improved handheld electronic device 4 comprises a housing 6, and further comprises an input apparatus 8, an output apparatus 12, and a processor apparatus 16 disposed on the housing 6. The input apparatus 8 provides input to the processor apparatus 16. The processor apparatus 16 provides output signals to the output apparatus 12.

The input apparatus 8 comprises a keypad 20 and a track ball 24. The keypad 20 in the exemplary embodiment depicted herein comprises a plurality of keys 26 that are each actuatable to provide input to the processor apparatus 16. The track ball 24 is rotatable to provide navigational and other input to the processor apparatus 16, and additionally is translatable in a direction inwardly toward the handheld electronic device 4 to provide other inputs, such as selection inputs. The track ball 24 is freely rotatable on the housing 6 and thus is able to provide navigational inputs in the vertical direction, i.e., the up-down direction, in the horizontal direction, i.e., the left-right direction, as well as combinations thereof. The keys 26 and the track ball 24 serve as input members which are actuatable to provide input to the processor apparatus 16. The exemplary output apparatus 12 comprises a display 32.

Many of the keys 26 each have a plurality of letters, i.e., linguistic elements, assigned thereto. For instance, one of the keys 26 has assigned thereto the letters "A" and "S". Another of the keys 26 has assigned thereto the letters "Q" and "W". The letters of the exemplary keypad 20 are in an arrangement of a reduced QWERTY keyboard.

Examples of other input members not expressly depicted herein would include, for instance, a mouse or track wheel for providing navigational inputs, such as could be reflected by movement of a cursor on the display 32, and other inputs such as selection inputs. Still other exemplary input members would include a touch-sensitive display, a stylus pen for making menu input selections on a touch-sensitive display displaying menu options and/or soft buttons of a graphical user interface (GUI), hard buttons disposed on the housing 6 of the handheld electronic device 4, an so on. Examples of other output devices would include a touch-sensitive display, an audio speaker, and so on.

The processor apparatus 16 comprises a processor 36 and a memory 40. The processor 36 may be, for example and without limitation, a microprocessor (µP) that interfaces with the memory 40. The memory 40 can be any one or more of a variety of types of internal and/or external storage media such as, without limitation, RAM, ROM, EPROM(s), EEPROM(s), FLASH, and the like that provide a storage register, i.e., a machine readable medium, for data storage such as in the fashion of an internal storage area of a computer, and can be volatile memory or nonvolatile memory. The memory 40 has stored therein a number of routines 44 that are executable on the processor 36. As employed herein, the expression "a number of" and variations thereof shall refer broadly to any nonzero quantity, including a quantity of one. One of the routines 44 is a disambiguation routine that is operable to disambiguate ambiguous text input, such as when one or more of the keys 26 having a plurality of letters assigned thereto is actuated.

Another of the routines 44 executable on the processor 36 is a calendar event rulemaking user interface 44. The calendar event rulemaking user interface 44 advantageously enables a user to efficiently manage incoming calendar events by enabling the user to create a number of rules in accordance with which incoming calendar events are processed, as will be set forth in greater detail below.

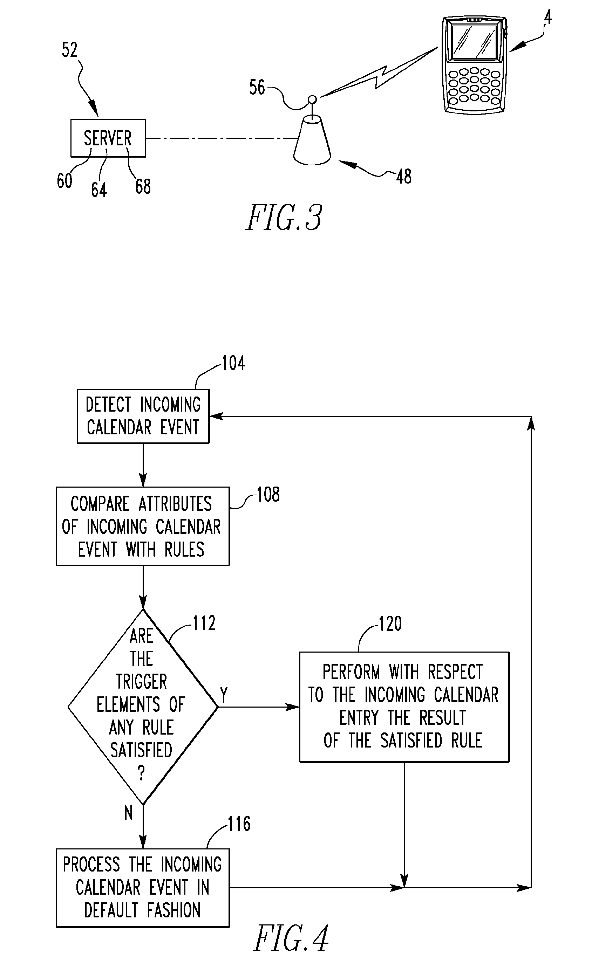

As can be understood from Fig. 3, the handheld electronic device 4 is part of a communication system 48 that further comprises a server 52 and a communications medium 56 which is depicted in a schematic fashion by an antenna. In the exemplary embodiment depicted herein, the communications medium 56 is a wireless communication network that comprises the aforementioned antenna and that communicates wirelessly with the handheld electronic device 4, although it is understood that in other embodiments the communications medium could be of a non-wireless configuration without departing from the present concept.

The server 52 comprises, for example, a server processor 60, a server memory 64, and a number of server routines 68 that stored in the server memory 64 and are executable on the server processor 60. The server processor 60 can be any of a wide variety of processors, and it interfaces with the server memory 64. The server memory can be any of a variety of storage devices. The server memory 64 serves as a machine readable medium, although it is understood that the server routines 68 could be stored on other machine readable media such as, for example, floppy discs, CDs, tape, DVDs, and the like without limitation.

The calendar event rulemaking user interface 44 enables a user to generate a number of rules that are employed to process incoming calendar events, such as calendar events that are received on the server 52 and that are intended for the user of the handheld electronic device 4. Specifically, the calendar event rulemaking user interface 44 generates a rulemaking dialog that is output on the display 32 and that allows a user to generate various custom rules which establish the various fashions in which certain new calendar events are processed. Each rule typically comprises one or more trigger elements and one or more results.

An incoming calendar event typically will have a number of attributes, such as a description attribute which describes the subject matter of the calendar event, a time attribute which describes the time during which the calendar event is intended to occur, a location attribute that describes the location where the calendar event is intended to occur, an originator attribute describing the person who originated or requested origination of the incoming calendar event, and other attributes. As a general matter, and in accordance with the improved method herein, the attributes of an incoming calendar event are compared with the trigger elements of the various rules that have been created by the user. If the attributes of the incoming calendar event satisfy the trigger elements of a rule that the user has created, or that was otherwise created, the results of the rule are processed with respect to the incoming calendar event. A few exemplary trigger elements and results are described herein, but it is understood that the teachings presented herein can be employed in conjunction with other trigger events and results without limitation.

By way of example, the user may have employed the calendar event rulemaking user interface 44 to create a rule whereby any incoming calendar event that would cause a time conflict with a preexisting calendar event and that is related to the subject of batteries would be automatically delegated to an individual named John Smith. Such an exemplary rule would have two trigger elements, i.e., one trigger element would be the existence of a time conflict with a preexisting calendar event, and the other trigger element would be that the incoming calendar event is related to the subject matter of batteries. The result of the rule would be a delegation of the incoming calendar event to John Smith. In the exemplary embodiment, therefore, upon receipt of an incoming calendar event, the various attributes thereof are compared with the rules that the user has already created and, if the trigger elements of any rule are satisfied, the result of the rule is carried out. Advantageously, therefore, an incoming calendar event having certain attributes can be automatically processed without direct attention by the intended recipient of the incoming calendar event.

The rules are created on the handheld electronic device 4 by the user who interfaces with the dialog generated by the calendar event rulemaking user interface 44 which is executed on the processor 36. The rules are at least initially stored in the memory 40. In one embodiment, therefore, when an incoming calendar event is received on the handheld electronic device 4, a routine 44 executed on the processor 36 determines whether the attributes of the incoming calendar event satisfy the trigger elements of any of the rules stored in the memory 40 and, if so, processes the result of the satisfied rule with respect to the incoming calendar event. For example, if the result is a delegation of the incoming calendar event to John Smith, the incoming calendar event would be forwarded from the handheld electronic device 4 back to the server 52 for delivery to John Smith. As an additional optional feature, an indication such as an email may be circulated to the other intended attendees of the calendar event and/or the originator of the calendar event indicating that the incoming calendar event was delegated to John Smith.

In another embodiment, however, the rules, once generated by the calendar event rulemaking user interface 44 on the handheld electronic device 4, are forwarded to the server 52 and stored in the server memory 64. In such a situation, the server 52 would have as one of the server routines 68 a calendar event processing routine 68 that would process incoming calendar events before they are delivered to intended recipients. For instance, and continuing the foregoing example, if the aforementioned rule was stored in the server memory 64, the incoming calendar event would be received on the server 52 from the originator. Prior to delivery of the incoming calendar event to the recipient, however, the attributes of the incoming calendar event would be compared with the various rules of the recipient that are stored in the server memory 64 to determine whether the trigger elements of any rule are satisfied. If so, the result of the satisfied rule would be processed by the server processor 60. Such an exemplary incoming calendar event could be automatically forwarded to John Smith by the server 52 without sending it to the intended recipient, i.e., the user of the handheld electronic device 4. In such a situation, since the server 52 would manage the email accounts of numerous users, an incoming calendar event to the server 52 would be directed by the server 52 into the email account of the delegate, rather than forwarding it to the delegator. That is, this aspect of the improved method advantageously avoids the calendar event from being sent to the intended recipient, i.e., the user of the handheld electronic device 4, who would be required to return the incoming calendar event to the server 52 for subsequent transfer to the email account of John Smith.

By storing the user-created rules in the server memory 64 and processing incoming calendar events on the server 52 in accordance with such rules, communication bandwidth between the server 52 and the various handheld electronic devices 4 can be conserved, and furthermore the users of the handheld electronic devices 4 will be interrupted to a relatively lesser extent. That is, in a situation where the rules are processed on the handheld electronic device 4, a user's email account might include a record of an incoming calendar event plus an indication that the incoming calendar event was delegated to John Smith. In the situation where the rules are stored and processed on the server 52, the user of the handheld electronic device 4 may merely receive an indication that an incoming calendar event was transferred to John Smith, thereby reducing the amount of attention that the user must direct toward the user's email account.

An exemplary flowchart depicting the processing of incoming calendar events in accordance with the disclosed and claimed concept is depicted generally in Fig. 4. It is understood that such processing, as set forth above, can be carried out on the handheld electronic device 4, on the server 52, or potentially can be processed in a distributed fashion by both the handheld electronic device 4 and the server 52 without limitation.

An incoming calendar event is detected, as at 104. The attributes of the incoming calendar event are then compared, as at 108, with the various rules that the user has already created. It is then determined, as at 112, whether the trigger elements of any rule are satisfied.

If it is determined, as at 112, that the trigger elements of no rules are satisfied, processing continues, as at 116, where the incoming calendar event is processed in a default fashion. For instance, the incoming calendar event might be delivered to the recipient's email account, thereby enabling the recipient to accept, decline, delegate, etc. the incoming calendar event. Processing thereafter would continue, as at 104, where additional incoming calendar events would be detected.

Alternatively, if it is determined at 112 that the trigger elements of a rule are satisfied by the attributes of the incoming calendar entry, processing continues, as at 120, where the result of the satisfied rule would be processed with respect to the incoming calendar entry. For instance, and in keeping with the foregoing example, if it is determined at 112 that the attributes of the incoming calendar event are such that a time conflict would be created and the subject matter of the incoming calendar event relates to batteries, the incoming calendar event would be delegated to John Smith. Processing would thereafter continue, as at 104, where additional incoming calendar events would be detected.

The rules created by the user can have any variety of trigger elements and results without limitation. For instance, a given rule may have a single trigger element or may have a plurality of trigger elements. In the situation of a plurality of trigger elements, the trigger elements can be arranged to have any desired logical relationship. For instance, some of the trigger elements can be related to one another in the conjunctive, i.e., a logical AND. Also, some of the trigger elements can be related in the disjunctive, i.e., a logical OR. Such logical relationships, and others, can be employed in various combinations as desired by the user.

To continue the foregoing example, the aforementioned rule has two trigger elements, i.e., one being that of a time conflict, and the other being that of subject matter relating to batteries, with the two trigger elements being related to one another in the conjunctive. For instance, IF a time conflict exists AND the subject matter of the incoming calendar event relates to batteries, THEN the incoming calendar event is delegated to John Smith.

In other embodiments, each rule can have an implied trigger element of a time conflict. In such a situation, each incoming calendar event would first be analyzed to determine whether a time conflict would be created. If no time conflict would be created, the incoming calendar event would be automatically processed in the default fashion. However, if a time conflict would be created by the incoming calendar event, the incoming calendar event would be further processed to compare the attributes thereof with the trigger elements of the various rules to see if the trigger elements of any rule are satisfied. Such an embodiment potentially could save processing resources by comparing an incoming calendar event with the various trigger elements of the rules only when a time conflict would be created. That is, such a system would advantageously avoid the need to compare the attributes of each incoming calendar event with one or more of the trigger elements of all of the rules. A similar result can occur if a location conflict is additionally or alternatively implied with each rule.

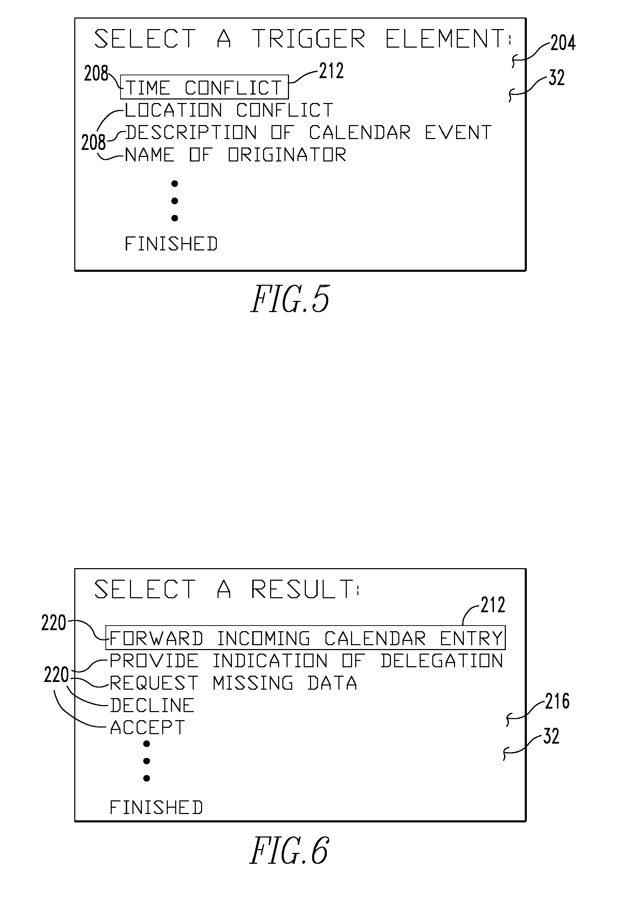

An exemplary rulemaking dialog that is generated by the calendar event rulemaking user interface 44 and is output on the display 32 is depicted generally in Figs. 5 and 6. Fig. 5 depicts a first calendar event rulemaking user interface screen 204 that requests a user to select a trigger element, and that provides a list of selectable trigger elements 208. A cursor 212 in the form of a box surrounding one of the trigger elements 208 is also depicted. For example, if the user initiated the calendar event rulemaking user interface, the user might first see the screen depicted generally in Fig. 5 which would enable the user to select a trigger element 208. The user would be able to scroll among the trigger elements 208, such as by providing a navigation input with the trackball 24, and select a desired trigger element 208 for inclusion in a new rule being created. After selection of such a trigger element 208, the dialog may request further input from the user to further specify the particular aspects of the selected trigger element 208 and to enable the user to select a logical connection between the currently selected trigger element 208 and, for example, one or more previously selected trigger elements 208 of the same rule that is being created. The first calendar event rulemaking user interface screen 204 of Fig. 5 further provides, for example, an alternative "FINISHED" that the user can select when all of the desired trigger elements 208 of the rule being created have been selected.

Upon detecting a selection of the "FINISHED" option of Fig. 5, the user would thereafter see, for example, a second calendar event rulemaking user interface screen 216, such as is depicted generally in Fig. 6. The exemplary screen 216 of Fig. 6 prompts the user to select a result, and lists a number of selectable results 220. Again, the cursor 212 highlights one of the selectable results 220 but can be scrolled among the various results 220 for selection thereof. Any one or more of the results 220 can be selected for a given rule, i.e., a rule can have a plurality of results that are processed when the trigger elements of the rule are satisfied.

Fig. 6 similarly provides a "FINISHED" option which, when selected, finalizes the new rule and stores it in the memory 40. As mentioned above, the new rule can either remain in the memory 40 for processing by the processor 36 or the new rule can be forwarded to the server 52 for storage in the server memory 64 and for processing on the server processor 60.

The rules can take many forms without limitation. For instance, a rule might be created such that if a particular attribute is missing from an incoming calendar entry certain actions are taken. For example, if an incoming calendar event has a location attribute that is different than the user's home location, and if the incoming calendar event lacks an attribute describing the details of a conference call, the result that is processed can be a request that is automatically provided to the originator of the incoming calendar event to provide the conference call information.

The incoming calendar events can be analyzed in any of a variety of ways in determining whether or not the trigger elements of a preexisting rule is satisfied. For instance, if a rule has as one of its trigger elements an existence of the word "battery" in a description attribute of a calendar event, such as would describe a situation where an incoming calendar event is related to subject matter of batteries, the description attribute of an incoming calendar event can be scanned to determine whether or not the words "battery" and/or "batteries" are present therein. If neither of the words "battery" and "batteries" exist in the description attribute, or if no description attribute is provided with the incoming calendar event, the "battery" trigger element of the rule would not be satisfied. Similarly, other attributes of the incoming calendar event can be scanned or otherwise processed to determine whether words or other circumstances exist which would meet the various trigger elements of the various predetermined rules.

The improved method thus advantageously enables incoming calendar events possessing certain attributes to be processed automatically without direct involvement by the user other than the user having previously created one or more rules to deal with such incoming calendar events. The improved method thus advantageously facilitates use of the handheld electronic device by reducing distraction to the user and performing functions automatically without direct involvement by the user.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof.

## Claims

1. A method of enabling a response to an incoming calendar event for a recipient, the method comprising:
detecting an incoming calendar event having a number of attributes;
making a determination that the number of attributes satisfy a preexisting rule having a number of trigger elements and a result; and
responsive to said making a determination, performing the result with respect to the incoming calendar event.

2. The method of Claim 1, further comprising making an initial determining that an attribute of the incoming calendar event is in conflict with an attribute of a preexisting calendar events and, responsive thereto, initiating said making a determination.

3. The method of Claim 2, further comprising performing as the result a forwarding of the incoming calendar event to at least a first predetermined alternate recipient.

4. The method of Claim 3, further comprising delegating to the at least first predetermined alternate recipient authority to act upon the incoming calendar event.

5. The method of Claim 3, further comprising providing an indication to at least a first recipient that the incoming calendar event was forwarded to the at least first predetermined recipient.

6. The method of Claim 2, further comprising employing as the attribute of the incoming calendar event one of a time attribute and a location attribute.

7. The method of Claim 6, further comprising employing as the attribute a time attribute, and making as at least a portion of the initial determination a determination that the time attribute of the incoming calendar event at least partially overlaps a time attribute of the preexisting calendar event.

8. The method of Claim 6, further comprising employing as the attribute a location attribute, and making as at least a portion of the initial determination a determination that the location attribute of the incoming calendar event is different than a location attribute of the preexisting calendar event.

9. The method of Claim 1 wherein the preexisting rule has as the number of trigger elements a plurality of trigger elements in a predetermined logical relationship, and further comprising making as at least a portion of said determination a determination that the number of attributes satisfy the logical relationship.

10. The method of Claim 9, further comprising employing as at least one of the trigger elements an existence of a predetermined word in a description attribute of a calendar event, and scanning the incoming calendar event to determine whether the predetermined word exists in a description attribute thereof.

11. The method of Claim 9, further comprising employing as at least one of the trigger elements an existence of a predetermined name in an originator attribute of a calendar event, and scanning the incoming calendar event to determine whether the predetermined name exists in an originator attribute thereof.

12. The method of Claim 9, further comprising employing as at least one of the trigger elements an absence of a predetermined attribute in a calendar event, determining that the predetermined attribute is absent from the number of attributes of the incoming calendar event and, responsive thereto, performing as the result a making of a request for the predetermined attribute.

13. The method of Claim 1, further comprising obtaining the preexisting rule from a device remote to a server, storing the preexisting rule on the server, and initiating on the server at least one of said detecting, said making a determination, and said performing.

14. The method of Claim 13, further comprising enabling the preexisting rule to be input by the recipient to a user interface executed on the device.

15. An electronic device comprising:
a processor apparatus comprising a processor and a memory;
an input apparatus structured to provide input to the processor apparatus;
an output apparatus that comprises a display and that is structured to receive output signals from the processor apparatus and to provide output;
the memory having stored therein at least a first routine that is executable on the processor, the at least first routine comprising a calendar event rulemaking user interface that comprises instructions which, when executed on the processor, cause the handheld electronic device to perform operations comprising:
outputting a calendar event rulemaking dialog;
detecting an input into the calendar event rulemaking dialog of a number of trigger elements and at least a first result; and
generating a rule that when an incoming calendar event having a number of attributes satisfies the number of trigger elements, the at least first result is performed with respect to the incoming calendar event.

16. The electronic device of Claim 15 wherein the operations further comprise sending the rule to a server for storage and execution thereon.

17. The electronic device of Claim 15 wherein the operations further comprise:
detecting an incoming calendar event having a number of attributes;
making a determination that the number of attributes satisfy the number of trigger elements; and
responsive to said making a determination, performing the result with respect to the incoming calendar event.

18. The electronic device of Claim 17 wherein the operations further comprise performing as the result a forwarding of the incoming calendar event to at least a first predetermined alternate recipient.

19. The electronic device of Claim 18 wherein the operations further comprise delegating to the at least first predetermined alternate recipient authority to act upon the incoming calendar event.

20. The electronic device of Claim 18 wherein the operations further comprise providing an indication to at least a first recipient that the incoming calendar event was forwarded to the at least first predetermined recipient.

21. A machine readable medium having stored thereon instructions which, when executed on a processor of a machine, cause the machine to perform operations comprising:
detecting an incoming calendar event having a number of attributes;
making a determination that the number of attributes satisfy a preexisting rule having a number of trigger elements and a result; and
responsive to said making a determination, performing the result with respect to the incoming calendar event.

## Amended claims

### Amended claims in accordance with Rule 137(2) EPC.

**1.** A method of enabling a response to an incoming calendar event for a recipient, the method comprising:
detecting (104) an incoming calendar event having a number of attributes, one of the number of attributes being a location attribute;
making a determination (112) that the number of attributes satisfy a preexisting rule having a number of trigger elements and a result, at least a portion of the determination (112) being a determination of whether the location attribute of the incoming calendar event is in conflict with a location attribute of a preexisting calendar event; and
responsive to said making a determination, performing (116,120) the result with respect to the incoming calendar event.

**2.** The method of Claim 1, further comprising making an initial determination (112) that another of the number of attributes of the incoming calendar event is in conflict with a corresponding attribute of a preexisting calendar event and, responsive thereto, initiating said making a determination.

**3.** The method of Claim 2, further comprising performing as the result (120) a forwarding of the incoming calendar event to at least a first predetermined alternate recipient.

**4.** The method of Claim 3, further comprising delegating to the at least first predetermined alternate recipient authority to act upon the incoming calendar event.

**5.** The method of Claim 3, further comprising providing an indication to at least a first recipient that the incoming calendar event was forwarded to the at least first predetermined alternate recipient.

**6.** The method of Claim 2, further comprising employing as one of the number of attributes a time attribute, and making as at least a portion of the initial determination (112) a determination that the time attribute of the incoming calendar event at least partially overlaps a time attribute of the preexisting calendar event.

**7.** The method of Claim 1 wherein the preexisting rule has as the number of trigger elements a plurality of trigger elements in a predetermined logical relationship, and further comprising making as at least a portion of said determination a determination that the number of attributes satisfy the logical relationship.

**8.** The method of Claim 7, further comprising employing as at least one of the trigger elements an existence of a predetermined word in a description attribute of a calendar event, and scanning the incoming calendar event to determine whether the predetermined word exists in a description attribute thereof.

**9.** The method of Claim 7, further comprising employing as at least one of the trigger elements an existence of a predetermined name in an originator attribute of a calendar event, and scanning the incoming calendar event to determine whether the predetermined name exists in an originator attribute thereof.

**10.** The method of Claim 7, further comprising employing as at least one of the trigger elements an absence of a predetermined attribute in a calendar event, determining (112) that the predetermined attribute is absent from the number of attributes of the incoming calendar event and, responsive thereto, performing as the result a making of a request for the predetermined attribute.

**11.** The method of Claim 1, further comprising obtaining the preexisting rule from a device remote to a server, storing the preexisting rule on the server, and initiating on the server at least one of said detecting, said making a determination (112), and said performing.

**12.** The method of Claim 11, further comprising enabling the preexisting rule to be input by the recipient to a user interface executed on the device.

**13.** An electronic device (4) comprising:
a processor apparatus (16) comprising a processor (36) and a memory (40);
an input apparatus (8) structured to provide input to the processor apparatus (16);
an output apparatus (12) that comprises a display (32) and that is structured to receive output signals from the processor apparatus (36) and to provide output;
the memory (40) having stored therein at least a first routine that is executable on the processor (36), the at least first routine comprising a calendar event rulemaking user interface (44) that comprises instructions which, when executed on the processor (36), cause the handheld electronic device (4) to perform operations comprising:
outputting a calendar event rulemaking dialog;
detecting an input into the calendar event rulemaking dialog of a number of trigger elements and at least a first result; and
generating a rule that when an incoming calendar event having a number of attributes satisfies the number of trigger elements, the at least first result is performed with respect to the incoming calendar event, the rule including a determination of whether a location attribute of the incoming calendar event is in conflict with a location attribute of the preexisting calendar event.

**14.** The electronic device (4) of Claim 13 wherein the operations further comprise sending the rule to a server for storage and execution thereon.

**15.** The electronic device (4) of Claim 13 wherein the operations further comprise:
detecting (104) an incoming calendar event having a number of attributes;
making a determination (112) that the number of attributes satisfy the number of trigger elements; and
responsive to said making a determination, performing (116,120) the result with respect to the incoming calendar event.

**16.** The electronic device (4) of Claim 15 wherein the operations further comprise performing as the result a forwarding of the incoming calendar event to at least a first predetermined alternate recipient.

**17.** The electronic device (4) of Claim 16 wherein the operations further comprise delegating to the at least first predetermined alternate recipient authority to act upon the incoming calendar event.

**18.** The electronic device (4) of Claim 16 wherein the operations further comprise providing an indication to at least a first recipient that the incoming calendar event was forwarded to the at least first predetermined alternate recipient.

**19.** A machine readable medium having stored thereon instructions which, when executed on a processor of a machine, cause the machine to perform operations comprising:
detecting (104) an incoming calendar event having a number of attributes;
making a determination (112) that the number of attributes satisfy a preexisting rule having a number of trigger elements and a result, with at least a portion of the determination (112) being a determination of whether the location attribute of the incoming calendar event is in conflict with a location attribute of the preexisting calendar event; and
responsive to said making a determination, performing (116,120) the result with respect to the incoming calendar event.
